# FASCICULE DE BREVET EUROPEEN

(11) **EP 0 528 933 B1**
(45) Date de publication et mention de la délivrance du brevet: **29.01.1997**
(21) Numéro de dépôt: 91909641.2
(22) Date de dépôt: 23.04.1991
(51) Int. Cl.: A01B 15/14, A01B 3/40

(54) **BATI DE CHARRUE DU TYPE COMPORTANT AU MOINS UN CORPS A VERSOIR ET SOC UNIQUE TRAVAILLANT DANS LES DEUX SENS DE LABOUR**
PFLUGGESTELL MIT EINTEILIGER PFLUGSCHAR UND STREICHBLECH FÜR BEIDE ARBEITSRICHTUNGEN
PLOUGH FRAME COMPRISING AT LEAST ONE BODY HAVING A PLOUGH BOARD AND A SINGLE PLOUGHSHARE ACTING IN BOTH PLOUGHING DIRECTIONS

(30) Priorité: 23.04.1990 FR 9005149; 01.10.1990 FR 9012072
(43) Date de publication de la demande: 03.03.1993
(73) Titulaire: COSTE, Jean-Louis, F-77400 S. Thibault-des-Vignes (FR)
(72) Inventeur: COSTE, Jean-Louis, F-77400 S. Thibault-des-Vignes (FR)
(86) Numéro de dépôt international: FR9100336
(87) Numéro de publication internationale: WO9115942

(56) Documents cités:
- WO-A-88/01129
- FR-A- 2 583 950
- FR-A- 2 635 635
- US-A- 4 800 963

## Description

La présente invention concerne un bâti de charrue du type comportant au moins un corps à versoir et soc unique, symétrique, travaillant dans les deux sens de labour, à droite et à gauche, destiné à être attelé à un tracteur.

Il est connu par la demande FR-8905192, qui montre les caractéristiques du préambule de la revendication 1, et un principe de largeur variable différent de la demande: le passage de l'avant-poutre porte-corps d'un sens de travail à l'autre et les positions continues de largeur de travail s'effectuent au moyen d'une rampe de forme diverse participant de manière indispensable à son guidage. Ce système de bâti est élaboré, encombrant et côuteux. Le déplacement de la poutre, d'un point sur la glissière guide au point central, ne peut s effectuer d'une manière simple que si son bras support a son pivot arrière situé dans la position maxi de largeur de travail, du même coté, du plan de symétrie longitudinale que le corps le plus à l'avant, et est peu éloigné de ce dernier, d'où fragilité, par le porte-à-faux, de la poutre porte-corps.
Sur un bâti de charrue destiné à être attelé à un tracteur, comportant au moins un corps à versoir et à soc unique pour les deux sens de labour, à droite et à gauche, constitué par une tête d'attelage (1), des éléments articulés oscillant par rapport à elle et incluant: une poutre porte-corps (5) munie de pivots (19) porte-corps régulièrement espacés le long d'elle constituant, avec des bras (13) dont au moins certains les commandent et un bras de liaison (15) qui relie les dits bras, un parallélogramme (5)/(13)/(15)/(13) relié en un de ses points à un moyen d'orientation des pivots porte-corps (19), au moins un élément potence (6) articulé d'une part autour d'un premier point (3) avec la tête (1) et d'autre part autour d'un second point (8) avec la poutre porte-corps (5) et permettant le passage de cette dernière de part et d'autre de la ligne passant par le point (8) et le point (3), au moins un premier moyen d'actionnement (16) permettant d'assurer le déplacement d'un des éléments poutre porte-corps (5) et potence (6), permettant d'obtenir différentes largeurs de travail, par oscillation de la poutre porte-corps (5) autour de la tête (1), la présente invention a pour but de remédier aux défauts énumérés dans les paragraphes précédents en adoptant les caractéristiques suivantes:
- un second moyen d'actionnement (9), assure le pivotement de la poutre d'un sens de travail à l'autre par le croisement de la poutre porte-corps (5) et potence (6) autour du point (8) de part et d'autre du plan axial longitudinal de la potence (6), prend appui entre la poutre porte-corps (5) et l'un des éléments de l'ensemble tête (1) et potence (6), le pivot (19) du porte-corps situé le plus à l'avant étant positionné à l'arrière du dit point (3), le dit second moyen d'actionnement (9) étant verrouillé en position de travail par un moyen de verrouillage (47) qui prend appui entre la poutre (5) et l'un des éléments tête (1) et potence (6) de sorte que la distance H entre la ligne passant par les pivots porte-corps (19) et sa parallèle passant par le point (3) soit sensiblement constante à différentes largeurs de labour, et en ce que le moyen de verouillage (47) est relié à des moyens d'alimentation de sorte à libérer le moyen (9) en phase de retournement et le verouiller en phase de labour,
- une distance entre le point (3) et le point (8) qui est sensiblement égale à: A', la distance entre deux pivots porte-corps (19) ajoutée à la distance entre d'une part le pivot porte-corps (19) le plus rapproché du point (3) et d'autre part le point (8), et (ou) une distance A entre le point (3) et le pivot (19) du porte-corps situé le plus à l'avant positioné à l'arrière du dit point (3) (inversement si la charrue est placée à l'avant du tracteur) qui est sensiblement égale à la distance entre deux pivots de corps consécutifs; de sorte notamment quand le tracteur roule par un coté dans le sillon précédent, pour une profondeur de labour donnée, à réaliser différents largeurs de travail au corps situé le plus à l'avant sensiblement égales à celles obtenues aux autres corps, par oscillation de la poutre porte corps (5) autour de la tête (1).

La présente invention sera mieux comprise à la lecture de la description qui va suivre, concernant quelques modes de réalisations particuliers non limitatifs de la présente invention et s'appuyant sur les dessins où :
la figure (1) représente un bâti de charrue constitué par une tête (1) et un élément (6) articulé entre la poutre (5) et la tête (1),
la figure 2 représente le second élément, un bras (4) support de guidage articulé, avec une partie coulissante,

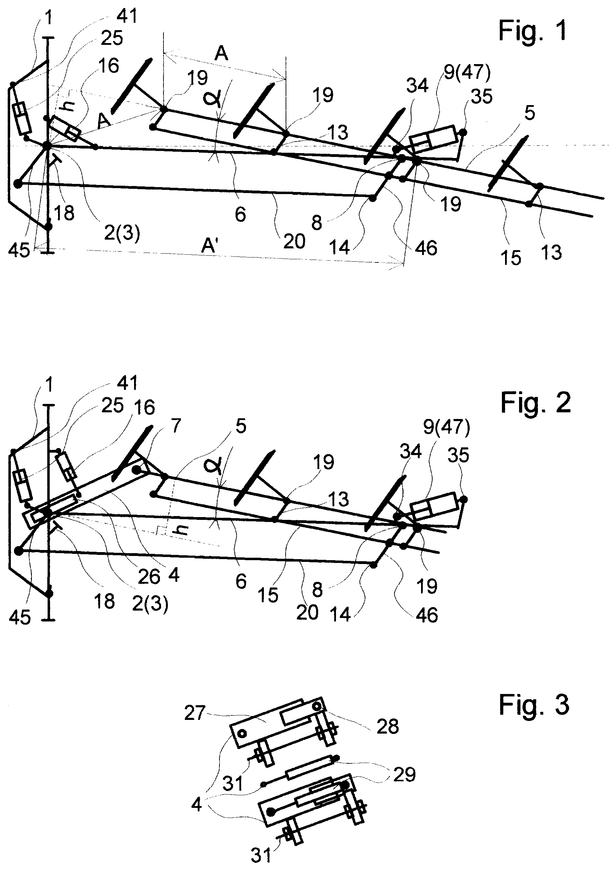

La figure 1 est constituée par une tête d'attelage (1) sur laquelle un axe (3), situé dans son plan vertical de symétrie selon un mode préféré de l'invention, reçoit un élément potence (6) sur lequel en un axe (8) un élément poutre (5) tourillonne dans une région plus distante de la tête (1), en arrière de l'axe (3), un moyen d'actionnement (16) s'appuie par ses extrémités sur la tête (1) et sur l'un (6) des deux éléments (5) et (6). Des pivots porte-corps (19) articulés avec la poutre (5) ont chacun solidaire d'eux un bras (13) articulé, un autre bras (15) parallèle à la poutre (5) les relie, pour constituer un parallélogramme articulé (5)/(13)/(15)/(13), un bras (13) du parallélogramme ne commandant pas de pivots porte-corps (19) et s'articule avec l'axe (8). Un moyen (47) de verrouillage réglable constitué de verrous hydrauliques limite la course d'un moyen (9) d'actionnement interposé entre (6) en (35) et (5) en 34 de sorte que la distance H entre la ligne passant par les pivots porte-corps (19) et sa parallèle passant par le point (3) soit sensiblement constante, lorsque (47) verrouille l'action de (9), pour une profondeur de labour donnée à différentes largeurs de travail. Un bras (20) parallèle à l'élément potence (6) s'articule avec l'axe (3) par un élément (45), avec l'axe (8) par un élément (46) constituant un second parallélogramme articulé (6)/(45)/(20)/(46), sur lequel s'appuie en (45) un moyen d'actionnement (25), l'autre appui de ce moyen étant sur la tête en un point 41, les deux parallélogramme sont reliés entre eux, par les bras (46) et (13), pour que l'action de (25) soit transmise aux pivots porte-corps (19). Ces deux dispositions combinées du moyen d'actionnement (25) et des deux parallélogramme rassemblent trois objectifs:
- maintenir les corps dans une même orientation par rapport à l'avancement pendant l'oscillation continue des éléments (5) et (6) autour de la tête (1), couvrant les diverses largeurs de travail dans les plages droites et gauches,
- celui de faire pivoter les porte-corps (19) pour le passage d'un sens de travail à l'autre,
- celui de corriger par un moyen de butée le "dévers de pointe".
Pour ajuster, selon des modes particuliers de l'invention, avec plus de précisions la largeur au premier corps on utilise la combinaison: poutre (5) qui oscille par rapport à la tête (1) par le moyen (16) et distance A ou (et) A' (A et A' tels que définis dans le préambule), maintient des corps dans une même direction, verrouillage du moyen (9); ce qui conduit, sans avoir à effectuer de réglage d'éléments entre eux pendant l'oscillation, à obtenir dans chaque position de la poutre une largeur de travail au premier corps sensiblement égale à celle obtenue à chaque corps, par une variation de largeur sensiblement proportionnelle entre eux des points de la poutre porte-corps (5).
A l'extrémité de la raie de labour, trois moyens d'actionnement sont mis en action, après libération du moyen d'actionnement (9) par déverrouillage de (47):
- (9) qui a pour effet de faire pivoter la poutre (5) de part et d'autre de la ligne (3)-(8) de l'élément potence (6) par rotation autour du point (8),
- (16) amenant, par rotation de part et d'autre de la tête (1) par l'axe (3), l'élément (6) dans la plage opposée de largeur de travail,
- (25) a pour effet de faire pivoter les porte-corps (19) dans l'autre sens de labour.
Les butées droite et gauche (18) fixées sur la tête et sur lesquelles vient en contact le bras potence (6) sont utilisées soit pour limiter les plages maxi de largeur de travail envisagées soit pour prédéterminer la largeur fixe choisie.

La figure 2 porte les mêmes repères pour les mêmes éléments. Le moyen de verrouillage (47) ici nommé (4) est articulé d'une part sur la poutre en un de ses points (7) et d'autre part en un point (2) sur l'un des deux autres éléments: le bras potence (6) et la tête (1), dans ce dernier cas et selon un mode préféré de l'invention situé sur le plan de symétrie longitudinal de la charrue. La position de l'axe (2) est telle que le pivotement des trois éléments (4),(5),(6) autour de l'axe (3) maintient sensiblement constant l'angle alpha que forme (5) et (6) en (8), afin de maintenir sensiblement égale la largeur de travail au corps le plus près de la tête, en arrière de l'axe (3), à celle qui sépare deux corps consécutifs.

Dans la figure 3, selon des modes préférés de l'invention le moyen (4), organe qui peut coulisser soit par une lumière (26) sur l'axe (2) soit par deux éléments télescopiques (27) et (28), selon un mode préféré de l'invention peut être combiné avec un élément élastique (29), chaque possibilité inclut une limitation du coulissement par butée (31) et un coulissement permettant dans le passage d'un sens à l'autre de travail, l'alignement des éléments (4), (5) et (6).
La source hydraulique (16) dans le cas de la figure 2 prend appui entre la tête (1) et (4). Selon des modes particuliers de l'invention, les axes 2 et (3) peuvent être confondus, des butées droites et gauches limitent la course latérale du moyen (4). La butée réglable (31) a pour but de varier la distance (h) entre la ligne passant par les pivots porte-corps (19) et sa parallèle passant par l'axe (2)/(3), pour obtenir une même orientation de la poutre (5) à des profondeurs de labour différentes et/ou des voies entre pneumatiques différentes. Les phases de fonctionnement étant par ailleurs similaires à celles de la figure (1).

## Revendications

1. Bâti de charrue destiné à être attelé à un tracteur, comportant au moins un corps à versoir et à soc unique pour les deux sens de labour, à droite et à gauche, constitué par une tête d'attelage (1), des éléments articulés oscillant par rapport à elle et incluant:
une poutre porte-corps (5) munie de pivots (19) porte-corps régulièrement espacés le long d'elle constituant, avec des bras (13) dont au moins certains les commandent et un bras de liaison (15) qui relie les dits bras, un parallélogramme (5)/(13)/(15)/(13) relié en un de ses points à un moyen d'orientation des pivots porte-corps (19),
au moins un élément potence (6) articulé d'une part autour d'un premier point (3) avec la tête (1) et d'autre part autour d'un second point (8) avec la poutre porte-corps (5) et permettant le passage de cette dernière de part et d'autre de la ligne passant par le point (8) et le point (3),
au moins un premier moyen d'actionnement (16) permettant d'assurer le déplacement d'un des éléments poutre porte-corps (5) et potence (6), permettant d'obtenir différentes largeurs de travail, par oscillation de la poutre porte-corps (5) autour de la tête (1),
caractérisé en ce que un second moyen d'actionnement (9), assurant le pivotement de la poutre d'un sens de travail à l'autre par le croisement de la poutre porte-corps (5) et potence (6) autour du point (8) de part et d'autre du plan axial longitudinal de la potence (6), prend appui entre la poutre porte-corps (5) et l'un des éléments de l'ensemble tête (1) et potence (6),
le pivot (19) du porte-corps situé le plus à l'avant étant positionné à l'arrière du dit point (3),
le dit second moyen d'actionnement (9) étant verrouillé en position de travail par un moyen de verrouillage (47) qui prend appui entre la poutre (5) et l'un des éléments tête (1) et potence (6) de sorte que la distance H entre la ligne passant par les pivots porte-corps (19) et sa parallèle passant par le point (3) soit sensiblement constante à différentes largeurs de labour, et en ce que le moyen de verouillage (47) est relié à des moyens d'alimentation de sorte à libérer le moyen (9) en phase de retournement et le verouiller en phase de labour.

2. Bâti de charrue selon la revendication 1 caractérisé en ce que la distance A' entre le point (3) et le point (8) est sensiblement égale à: la distance entre deux pivots porte-corps (19) ajoutée à la distance entre d'une part le pivot porte-corps (19) le plus rapproché du point (3) et d'autre part le point (8), de sorte notament quand le tracteur roule par un coté dans le sillon précédent, pour une profondeur de labour donnée, à réaliser différentes largeurs de travail au corps situé le plus à l'avant sensiblement égales à celles obtenues aux autres corps, par oscillation de la poutre porte-corps (5) autour de la tête (1).

3. Bâti de charrue selon la revendication (1) caractérisé en ce que la distance A entre le point (3) et le pivot (19) du porte-corps situé le plus à l'avant positioné à l'arrière du dit point (3) est sensiblement égale à la distance entre deux pivots de corps consécutifs, de sorte, pour une profondeur de labour donnée, à réaliser différentes largeurs de travail au corps situé le plus à l'avant sensiblement égales à celles obtenues aux autres corps, par oscillation de la poutre porte-corps (5) autour de la tête (1).

4. Bâti de charrue selon la revendication (1) caractérisé en ce que le moyen de verrouillage (47) est constitué d'un organe (4) coulissant qui est articulé d'une part sur la poutre par un troisième point (7) et d'autre part par un quatrième point (2) sur l'un de deux autres éléments: le bras potence (6) et la tête (1) et est relié à des moyens d'alimentation de sorte à libérer le moyen (9) en phase de retournement et le verouiller en phase de labour.

## Claims

1. Plough frame designed to be coupled to a tractor, comprising at least one mouldboard body and with one single ploughshare for both ploughing directions, to the right and to the left, consisting of a coupling head (1), articulated elements oscillating in relation to the latter, and including:
-- a body-bearing beam (5) fitted with body-bearing pivots (19) evenly spaced out along the said beam, constituting, with arms (13) of which at least control them and a connecting arm (15) which interconnects the said arms, a parallelogram (5)/(13)/(15)/(13) connected by one of its points to an orientation means for the body-bearing pivots (19),
-- at least one bracket element (6) articulated on one side around a first point (3) to the head (1) and on the other side around a second point (8) to the body-bearing beam (5) and enabling this latter to move past on either side of the line passing through the point (8) and the point (3),
-- at least one operating means (16) rendering possible the movement of one of the elements, body-bearing beam (5) and bracket (6), so that different working widths can be obtained, by the oscillation of the body-bearing beam (5) around the head (1),
characterised by the fact that a second operating means (9), causing the beam to pivot from one working direction to the other by the crossing of the body-bearing beam (5) and the bracket (6) around the point (8) on either side of the longitudinalaxial plane of the bracket (6), supports itself between the body-bearing beam (5) and one of the elements of the assembly consisting of the head (1) and the bracket (6), the pivot (19) of the body-bearing element situated farthest forward being positioned behind the said point (3), the said second operating means (9) being locked in the working position by a locking means (47) which supports itself between the beam (5) and one of the elements, head (1) and bracket (6), in such a way that the distance H between the line passing through the body-bearing pivots (19) and the line parallel thereto and passing through the point (3) will remain largely constant at different ploughing widths, and by the fact that the locking means (47) is connected to feeding means in such a way as to release the means (9) in the turning phase and lock it in the working phase.

2. Plough frame in accordance with Claim 1, characterised by the fact that the distance A' between the point (3) and the point (8) is substantially equal to: the distance between the two body-bearing pivots (19), added to the distance between the nearest body-bearing pivot (19) to the point (3), on the one hand, and the point (8), on the other hand, in such a way that, particularly when the tractor is travelling on the one side in the preceding furrow, for a given ploughing depth, different working widths will be obtained for the body situated farthest forward, these being substantially equal to those obtained for the other bodies, by the oscillation of the body-bearing beam (5) around the head (1).

3. Plough frame in accordance with Claim 1, characterised by the fact that the distance A between the point (3) and the pivot (19) of the body-bearing element situated farthest forward, positioned behind the said point (3), is substantially equal to the distance between two consecutive body-bearing pivots, so that, for a given ploughing depth, different operating widths are obtained for the body situated farthest forward, these being substantially equal to those obtained for the other bodies, by the oscillation of the body-bearing beam (5) around the head (1).

4. Plough frame in accordance with Claim (1), characterised by the fact that the locking means (47) is formed by a sliding organ (4) articulated on the one hand to the beam by a third point (7) and on the other by a fourth point (2) to one of the two elements, the bracket arm (6) and the head (1), and is connected to feeding means in such a way as to release the means (9) in the turning phase and lock it in the working phase.

## Patentansprüche

1. Pflugrahmen, dazu bestimmt, an einen Traktor angehängt zu werden, wobei der Rahmen wenigstens einen Körper mit Streichblech und Einzelschar für die beiden Pflügrichtungen, nach rechts und nach links, umfaßt und aus folgendem besteht: einem Kupplungskopf (1), gelenkig verbundenen Elementen, die in Bezug auf diesen schwenkbar sind und umfassen:
einen Balken-Tragkörper (5), der mit Tragkörper-Drehachsen (19) versehen ist, die entlang demselben in regelmäßigen Abständen angeordnet sind, und mit Armen (13), von denen wenigstens einige diese betätigen, und einem Verbindungsarm (15), der diese Arme verbindet, wobei ein Parallelogramm (5)/(13)/(15)/(13) gebildet wird, das an einem seiner Punkte mit einem Mittel zur Orientierung der Tragkörper-Drehachsen (19) verbunden ist,
wenigstens einen Ausleger (6), der einerseits um einen ersten Punkt (3) gelenkig mit dein Kopf (1) verbunden ist und andererseits um einen zweiten Punkt (8) gelenkig mit dem Balken-Tragkörper (5) verbunden ist und das Schwenken dieses letzteren auf beide Seiten der durch den Punkt (8) und den Punkt (3) verlaufenden Linie gestattet,
wenigstens ein erstes Antriebsmittel (16), das die Verschiebung eines der Elemente Balken-Tragkörper (5) und Ausleger (6) erlaubt es ermöglicht, durch Schwenken des Balken-Tragkörpers (5) um den Kopf (1) verschiedene Arbeitsbreiten zu erhalten,
wobei die am weitesten vorn befindliche Drehachse (19) des Tragkörpers hinter dem Punkt (3) angeordnet ist,
wobei das zweite Antriebsmittel (9), das sich zwischen dem Balken (5) dadurch gekennzeichnet, daß sich ein zweites Antriebsmittel (9), welches das Schwenken des Balkens von einer Arbeitsrichtung in die andere durch die Verschwenkung des Balken-Tragkörpers (5) gegenüber dem Ausleger (6) um den Punkt (8) auf beide Seiten der axialen Längsebene des Auslegers (6) ermöglicht, vorgesehen ist und zwischen dem Balken-Tragkörper (5) und einem der Elemente des Komplexes Kopf (1) und Ausleger (6) abgestützt ist,
und einem der Elemente Kopf (1) und Ausleger (6) abstützt, in der Arbeitsposition durch ein Verriegelungsmittel (47) arretiert wird, so daß der Abstand H zwischen der Linie, die durch die Tragkörper-Drehachsen (19) verläuft, und ihrer Parallelen, die durch den Punkt (3) verläuft, bei verschiedenen Pflügbreiten im wesentlichen konstant ist, und daß das Verriegelungsmittel (47) mit Speisungsmitteln verbunden ist, um das Mittel (9) in der Wendephase freizugeben und in der Arbeitsphase zu arretieren.

2. Pflugrahmen nach Anspruch 1, dadurch gekennzeichnet, daß der Abstand A' zwischen dem Punkt (3) und dem Punkt (8) im wesentlichen entspricht: dem Abstand zwischen zwei Tragkörper-Drehachsen (19) plus dem Abstand zwischen einerseits der Tragkörper-Drehachse (19), die dem Punkt (3) am nächsten ist, und andererseits dem Punkt (8), um insbesondere, wenn der Traktor mit einer Seite in der vorhergehenden Furche fährt, für eine gegebene Pflügtiefe durch Schwenken des Balken-Tragkörpers (5) um den Kopf (1) verschiedene Arbeitsbreiten an dem am weitesten vorn befindlichen Körper zu schaffen, die im wesentlichen den an den anderen Körpern erzielten entsprechen.

3. Pflugrahmen nach Anspruch 1, dadurch gekennzeichnet, daß der Abstand A zwischen dein Punkt (3) und der am weitesten vorn befindlichen und hinter dem Punkt (3) angeordneten Drehachse (19) des Tragkörpers im wesentlichen dem Abstand zwischen zwei Drehachsen aufeinanderfolgender Körper entspricht, um für eine gegebene Pflügtiefe durch Schwenken des Balken-Tragkörpers (5) um den Kopf (1) verschiedene Arbeitsbreiten an dem am weitesten vorn befindlichen Körper zu schaffen, die im wesentlichen den an den anderen Körpern erzielten entsprechen.

4. Pflugrahmen nach Anspruch 1, dadurch gekennzeichnet, daß das Verriegelungsmittel (47) von einem Schieberorgan (4) gebildet wird, das einerseits an einem dritten Punkt (7) auf dem Balken und andererseits an einem vierten Punkt (2) auf einem der zwei anderen Elemente: dem Ausleger (6) und dem Kopf (1) angelenkt ist und mit Speisungsmitteln verbunden ist, um das Mittel (9) in der Wendephase freizugeben und in der Arbeitsphase zu arretieren.
